# EUROPEAN PATENT SPECIFICATION

(11) **EP 2 423 086 B1**
(45) Date of publication and mention of the grant of the patent: **19.03.2014**
(21) Application number: 11007017.4
(22) Date of filing: 29.08.2011
(51) Int. Cl.: B62J 15/02

(54) **Device for fixing a bicycle mudguard to a mudguard-holding rod**
Befestigungsvorrichtung von einem Fahrradschutzblech mit einer Stützstange
Dispositif de fixation d'un garde-boue pour bicyclette avec une tige de support

(30) Priority: 30.08.2010 IT PD20100263
(43) Date of publication of application: 29.02.2012
(73) Proprietor: Eurofender s.r.l., 35136 Padova (PD) (IT)
(72) Inventor: Silvestri, Alberto, 35136 Padova (IT)

(56) References cited:
- EP-A1- 1 221 407
- EP-A1- 1 790 558
- EP-A1- 1 852 340
- EP-A1- 1 867 562
- EP-A1- 1 884 456
- FR-A3- 2 893 301

## Description

This invention concerns a device for fixing a bicycle mudguard to a mudguard-holding rod.

A device of the same type is described for example in European patent EP0742137; in which we can see a body made of plastic equipped with grooving inside which goes the flap of the mudguard and it has two holes through which pass the mudguard-holding rods coming from the frame of the bicycle and another hole inside which a screw is inserted for fixing the mudguard to the plastic body and the mudguard-holding rods to the plastic body, thereby preventing any sliding.

Another improvement is show in patent EP1331165; here again is a plastic body that has a hole through which pass the mudguard-holding rods coming from the frame of the bicycle and another hole for inserting a push-in element for holding said rods, with there being a cut out on the edge of the mudguard inside which a tab that is on the plastic body is inserted in order to prevent any sliding between the plastic body and the mudguard, after the mudguard has been inserted into the housing on the plastic body.

There are also other devices very similar to the above-mentioned ones, which however always have two separate elements, a main body and an auxiliary coupling device, which can also be simply a threaded screw, for holding and fixing, after initial interference is exceeded, or for pressure clamping, of the mudguard fixing device at least at the corresponding mudguard-holding rods.

Sometimes the coupling of the main body and the auxiliary device has to follow a precise sequence of operations, subject to the complete disassembly of all the elements.

Moreover, very often special equipment is needed for the secure assembly of the main body to the auxiliary coupling device.

This required union of various separate pieces, and perhaps the need for particular equipment for the mutual locking of the main body and the auxiliary device, makes the current devices a little impractical, difficult to use, and expensive to make and assemble.

Moreover, very often existing devices require an opening of the edge of the mudguard to allow for the insertion of a counterpart in order to avoid sliding of said devices along the edge itself of the mudguard.

Other devices of the same type are described for example in EP 1221407, EP 1867562, EP1790558, EP1852340, EP 1884456, FR2893301. The features of the preamble of claim 1 are known from EP 1221407.

With the device that is the object of this patent application all the above-mentioned drawbacks have been overcome with additional and advantageous functions that will become evident in the following description.

The object of this invention is made up of a device for fixing a bicycle mudguard (fender) to a mudguard-holding rod according to claim 1.

Advantageously the body of the fixing device has a partial separation gap between the first part and the second part of the fixing device, thereby conferring greater elasticity and/or the possibility of them having a greater range.

An advantageous characteristic is having the housing of the mudguard carrying rod that extends for the insertion of the mudguard-carrying rod itself beyond the partial separation gap, up to almost the full length of the fixing device, providing the necessary solidity to the structure of the body of the device, being hardly weakened at all, or not at all, by the reduction in the size of the cross-section due to the partial separation gap.

Another advantage is that the joining process and its maintenance can be carried out without the need for particular instruments or tools, since the reduction is created through the two counterposed lever arms, which are capable of a sufficient pressure on the end of the mudguard carrying rod.

Another useful characteristic is having the possibility to decouple the mudguard holding rods from the reciprocal coupling with the fixing device without using special tools but just with the simple stress in a direction opposite to the coupling of the wing since there is specific grooving that facilitates its engagement.

With the device that is the object of this invention finally you get improved solidity of the mudguard itself, because an interruption of the continuity of the edge of the mudguard itself is not necessary, since there is an adequate opening conveniently distanced from the edge of the mudguard, inside which it is inserted, and following translation, the protrusions, configured as one or more wings, couple with the mudguard itself.

Each protrusion, advantageously located at the top end of the fixing device, prevents any sliding of the fixing device along the edge of the mudguard; moreover, these protrusions provide an immediate and correct positioning into the respective opening specially made beforehand on the mudguard itself.

Because the edges of the opening are not subject to stresses from other retaining forces of the device itself on the mudguard, because on the edge of the mudguard, after an initial interference, it couples with a complementary profile, in the shape of tongs one wing on the lower surface, maintaining residual pressure on the edge of the mudguard.

Once the fixing device has been fully assembled, following the grasping and fixing movement of the flexible lower retaining wing on the respective side edge of the mudguard, the winged protrusion, whose wing engages the inner surroundings of the edge of the setting opening of the mudguard, does not put stress directly on the edge with its stem, especially the edge in the direction of the grasping movement, in order to prevent any stresses that could lead to breaking, starting with cracks forming along the edge of the opening.

The above-mentioned benefits can be better seen with reference to a non-restrictive preferred solution set out in the following diagrams, where:

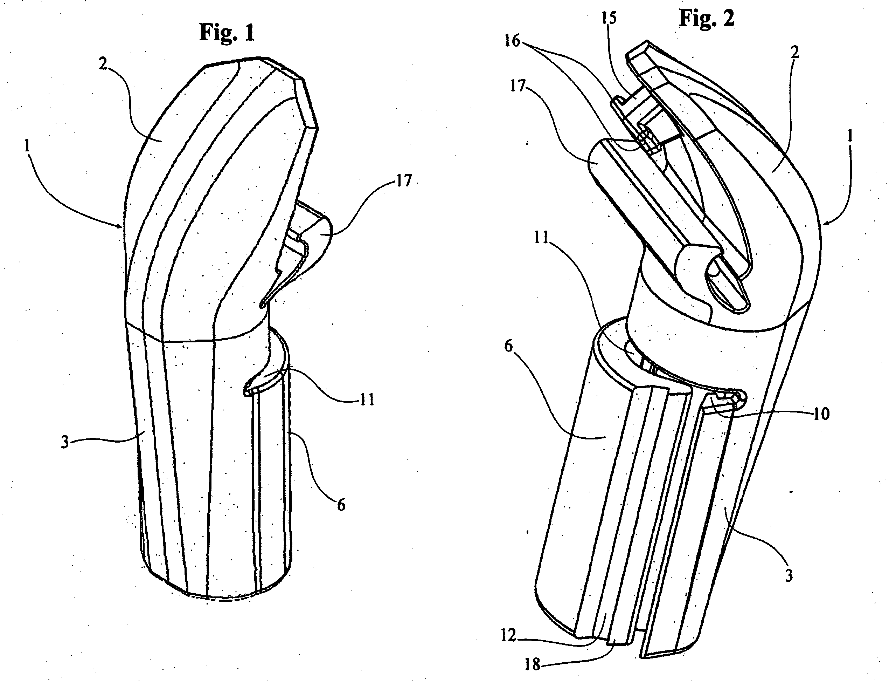

Fig. 1 shows a prospective view from above of the fixing device that is the subject of this invention.
Fig. 2 shows the device of fig. 1 from a different angle.
Fig. 3 shows a side plane view, and fig. 4 shows the corresponding cross-section according to a parallel plane passing through the axis of the hole of the mudguard holding rod.
Fig. 5 shows a cross-section perspective view of the device from below.
Fig. 6 shows a plane view from below.

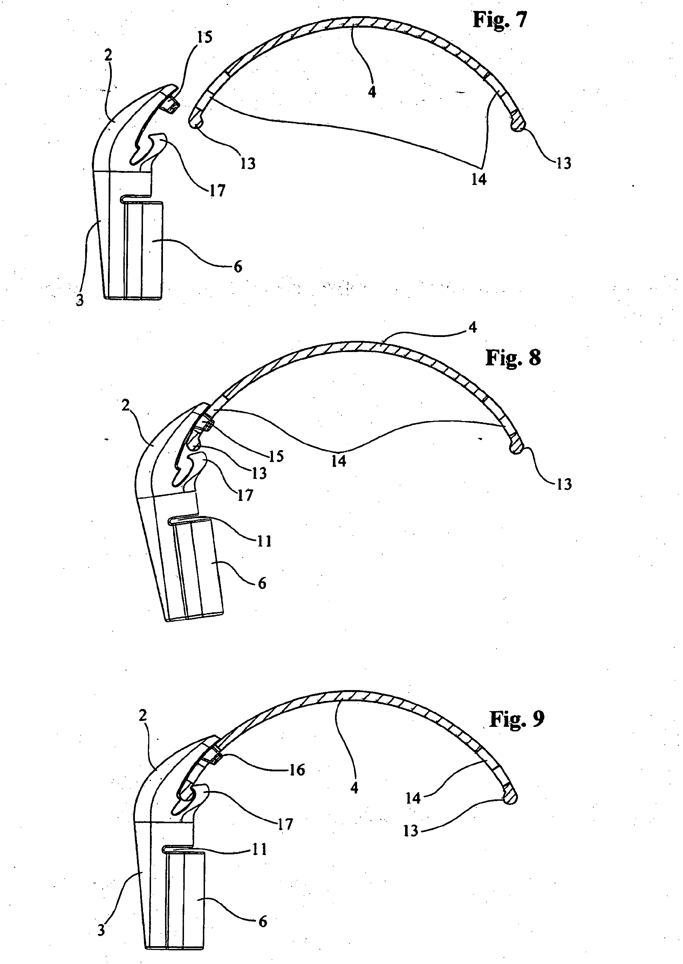

Figs. 7, 8 and 9 show the sequence of operations for the fixing device to engage with a section of the mudguard.
Fig. 10 shows a piece of mudguard with the opening for the correct positioning of the fixing device highlighted.
Fig. 11 shows a perspective cross-section view of the fixing device installed on the mudguard.

With reference to the diagrams, it can be seen that the fixing device 1 is structurally composed of two parts, the first part 2 for coupling with the mudguard 4, and a second part 3 for retaining the end of the mudguard holding rod (not shown).

The first part 2 includes the first devices for coupling with the edge of the mudguard 4.

The second part 3 includes the second devices for coupling the fixing device 1 with the mudguard holding rods.

Said second devices are made up of a double lever 5, 6 with counterposed arms, which include the housing 7 for the end of the rod holding the mudguard.

In particular, a part of the housing 7 for the rod holding the mudguard has at least one stretch in common with the arm of the more internal lever 5, whose end 8 is near the fulcrum 9 of the second lever 6.

Following the action of the pressure exercised on the outside of lever 6, with the consequent rotation of lever 6 itself with respect to the fulcrum 9, the more internal lever 5 is put under stress, near its end part 8, against the end of the rod holding the mudguard that has already been inserted into the housing 7, with considerable gripping pressure.

In the case, where a large part of the circumferential surface of the housing 7 coincides with the arm of lever 5, the gripping comes from the squeezing pressure of the housing that affects a large part of the outer wall of the end of the rod holding the mudguard.

The outer lever 6, following the overcoming of an initial interference of a retaining device 10, keeps the internal lever 5 continuously under pressure.

In fact, because the retaining device 10 is tooth-shaped, and fixed solidly to the body itself of the fixing device, which couples with a corresponding tooth 18 on the end part of lever 6, it keeps the outer lever 6 in elastic tension, with a consequent pressure on the internal lever 5.

In order to obtain an elevated course for the outer lever 6 and for the internal lever 5, between the two parts 2, 3 of the fixing device 1 there is a partial discontinuity 11 for separating the two above-mentioned parts 2, 3.

With this separation discontinuity 11 you also obtain greater elasticity of the two levers 5, 6.

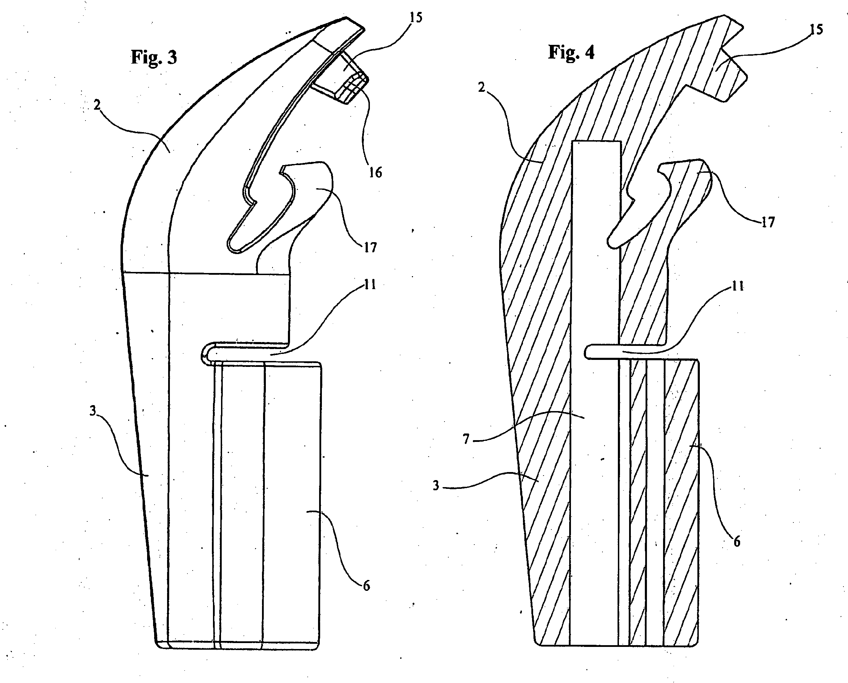

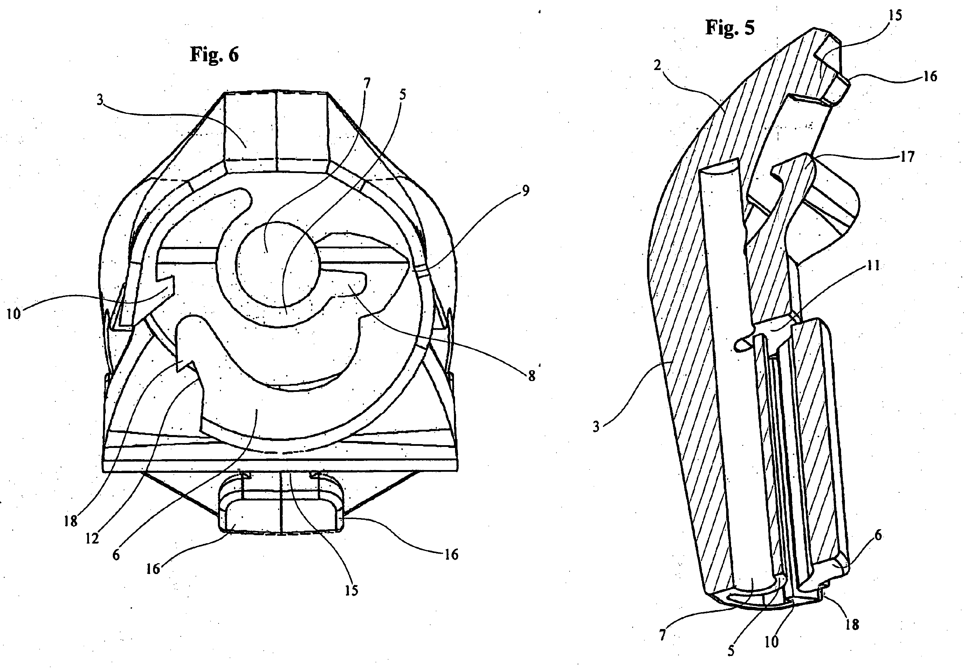

As is very clear from the sections of figs. 4 and 5 of the fixing device 1, the housing 7 of the end of the rod holding the mudguard extends beyond the separation discontinuity 11 terminating in the part 2 of the fixing device 1, guaranteeing the necessary structural solidity to the body of the device 1 between the two parts 2, 3, therefore the reduction in section caused by the separation discontinuity 11 has practically no impact.

The tapered configuration of the lever 6, near the end where it couples with the retaining tooth 10, creates a useful groove 12 (between tooth 10 and lever 6), to provide an easy disengagement of tooth 10 and tooth 18.

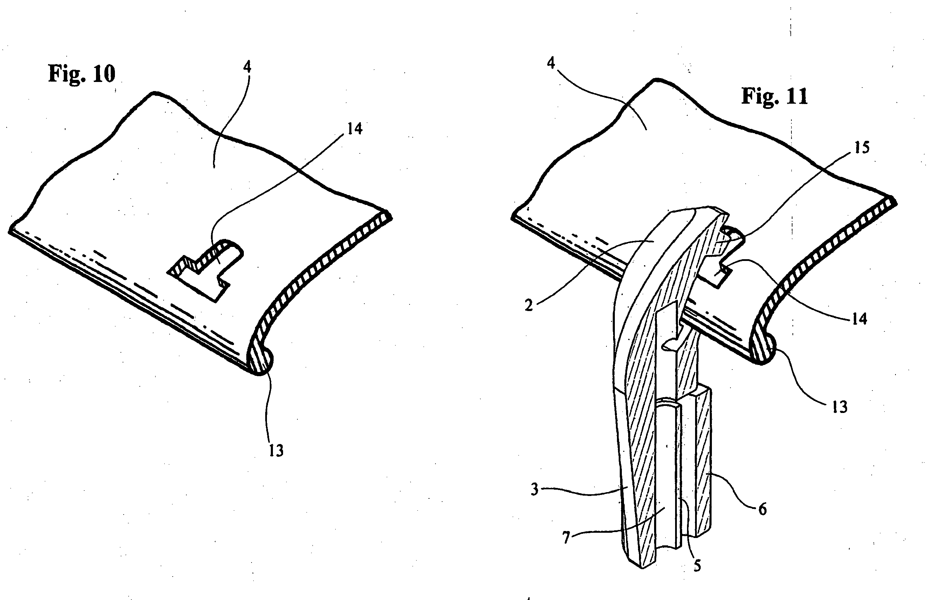

As can be clearly seen in fig. 10, there is no interruption in the continuity of the edge 13 of the mudguard 4, because the opening 14 is at a suitable distance from the edge 13.

The protrusion 15, located on the upper end of part 2 of the fixing device 1, is inserted inside this opening 14.

This protrusion 15 has one or more wings 16 at the end that engage the internal surface of the mudguard 4.

This protrusion provides for rapid and correct positioning, with the entire fixing device having to enter the respective opening 14.

Another function of this protrusion is that of preventing the sliding of the fixing device 1 along the edge 13 of the mudguard 4.

In the sequence of installation operations, as seen in drawings 7 to 9, we see that after positioning the fixing device 1, with the corresponding entry of the protrusion 15 inside the opening 14 on the mudguard 14, there is a sliding of the fixing device 1 placed against an outer surface of the mudguard 4 (and allowed by the profile of the opening 14) until there is a stable coupling, after the overcoming of an initial interference..

Indeed, the fixing device 1, in particular part 2 of it, has a flexible wing 17, that bends during said sliding movement of the fixing device in relation to the mudguard 4 for clasping, maintaining residual pressure on the edge of the mudguard 4.

This coupling of the device 1 and the mudguard 4 is configured like the clamping of a tong by the complementary profile to the mudguard.

It is clear also from drawing 11 that the protrusion 15 puts no pressure on the edges of the opening 14, avoiding any stresses that could lead to breaking, beginning with cracks along the edge of the opening.

## Claims

1. A device for fixing a bicycle mudguard to a mudguard-holding rod, the fixing device (1) is a single-body design, composed of a first part (2) comprising a first means for connecting the fixing device (1) to an edge (13) of the bicycle mudguard (4) and a second part (3) comprising a second means for connecting the fixing device (1) to the mudguard-holding rod **characterized in that** the second means is composed of a first (5) and a second (6) lever, opposite to each other, each lever comprises an arm having two end portions, the first end portion of each arm is integral. and pivotably connected with a body of the fixing device (1), the mudguard-holding rod is adapted to be gripped in a special housing (7) at least a part of which is formed by a part of the arm of the first lever (5), the second end portion (8) of the arm of the first lever (5) is positioned near the pivot (9) of the arm of the second lever (6), and is adapted to be pressed by the arm of the second lever (6) against the mudguard-holding rod for gripping it in the special housing (7), after that the second end portion (18) of the arm of the second lever (6) engages with a snap action a retaining device (10) which is integral with the body of the fixing device (1).

2. Device for fixing a bicycle mudguard to a mudguard-holding rod according to claim 1 **characterised by** the fact that in the body of the fixing device (1) there is a partial separation gap (11) between the first part (2) and the second part (3) of the fixing device (1).

3. Device for fixing a bicycle mudguard to a mudguard-holding rod according to claim 2 **characterised by** the fact that the housing (7) of the mudguard-holding rod extends for inserting the mudguard-holding rod itself beyond the partial separation gap (11) up to almost the full length of the fixing device (1).

4. Device for fixing a bicycle mudguard to a mudguard-holding rod according to claim 1 **characterised by** the fact that the joining process and the maintenance of this joint is adapted to occur without any need for special equipment or tools.

5. Device for fixing a bicycle mudguard to a mudguard-holding rod according to claim 1 **characterised by** the fact that the presence of grooving (12) between the retaining device (10) for holding the second lever (6) and the end (18) of the second lever configured for joining to said retaining device (10) is adapted to allow the mudguard-holding rod to disengage from the reciprocal coupling to the fixing device (1) without using special equipment but just with the simple application of pressure inside the grooving (12) in a direction opposite to the coupling of the lever arms.

## Patentansprüche

1. Vorrichtung zur Befestigung eines Fahrradschutzblechsmit einer Schutzblechhaltestange, die Befestigungsvorrichtung (1) ist eine einzige Bauart, die sich aus einem ersten Teil (2) zusammensetzt und ist ein erstes Mittel zum Verbinden der Befestigungsvorrichtung (1) zu einer Kante (13) des Fahrradschutzblechs (4) und einem zweiten Teil (3) und eine zweite Einrichtung zum Verbinden der Befestigungsvorrichtung (1) an der Schutzblechhaltestange, **dadurch gekennzeichnet, dass** die zweiten Mittel aus einem ersten (5) zusammengesetzt sind und ein zweiter (6) Hebel, einander entgegengesetzt, jeder Hebel umfasst einen Arm mit zwei Enden, wobei der erste Endabschnitt jedes Arms schwenkbar mit einem Körper der Befestigungsvorrichtung (1) verbunden ist, die Schutzblechhaltestange ist angepasst, um in einem speziellen Gehäuse (7) gegriffen zu werden, zumindest ein Teil davon durch einen Teil des Arms des ersten Hebels (5), der zweite Endteil (8) von dem ersten Hebelarm (5) befindet sich nahe dem Schwenkpunkt (9) des zweiten Hebelarms (6) und wird von dem zweiten Hebelarm (6) gegen die Kotflügelhaltestange zum Greifen in das speziellen Gehäuse gedrückt (7), danach greift der zweite Endabschnitt (18) des zweiten Hebelarms (6) mit einer Schnappwirkung eine Haltevorrichtung (10), die mit dem Körper der Befestigungsvorrichtung (1) integriert ist.

2. Vorrichtung zur Befestigung eines Fahrradschutzblechs mit einer Schutzblechhaltestange nach Anspruch 1, die **dadurch gekennzeichnet ist, dass** in dem Körper der Befestigungsvorrichtung (1) eine teilweise Trennung Spalt (11) zwischen dem ersten Teil (2) und dem zweiten Teil (3) der Befestigungsvorrichtung (1) besteht.

3. Vorrichtung zur Befestigung eines Fahrradschutzblechs mit einer Schutzblechhaltestange nach Anspruch 2, die **dadurch gekennzeichnet ist, dass** das Gehäuse (7) der Kotflügelhaltestange zum Einsetzen der Kotflügelhaltestange sich über den Teiltrennspalt (11) bis fast die gesamte Länge der Befestigungsvorrichtung (1) erstreckt.

4. Vorrichtung zur Befestigung eines Fahrradschutzblechs mit einer Schutzblechhaltestange nach Anspruch 1, die **dadurch gekennzeichnet ist, dass** das Verbindungsverfahren und die Aufrechterhaltung dieser Verbindung geeignet ist, ohne dass eine spezielle Ausrüstung oder Werkzeuge gebraucht werden.

5. Vorrichtung zur Befestigung eines Fahrradschutzblechsmit einer Schutzblechhaltestange nach Anspruch 1, die **dadurch gekennzeichnet ist, dass** das Vorhandensein von Rillen (12) zwischen der Halteeinrichtung (10) zum Halten des zweiten Hebels (6) und das Ende (18) der Außenhebel zur Verbindung mit der Haltevorrichtung (10) ISA angepasst ist und damit die Kotflügelhaltestange aus der gegenseitigen Kopplung mit der Befestigungsvorrichtung (1) ohne Verwendung spezieller Ausrüstung zu lösen ist, sondern nur mit der einfachen Anwendung von Druck innerhalb der Nuten (12) in die entgegengesetzte Richtung zur Kopplung der Hebelarme.

## Revendications

1. Dispositif pour la fixation d'un garde-boue de bicyclette à une tige de support de garde-boue, le dispositif de fixation (1) est un corps unique comprenant une première partie (2) qui possède les premiers moyens pour l'union du dispositif de fixation (1) à un bord (13) du garde-boue (4) et une seconde partie (3) comprenant des seconds moyens pour l'union du dispositif de fixation (1) à la tige de support du garde-boue **caractérisé par le fait que** les seconds moyens soient constitués d' un premier (5) et un second levier (6), l'un en face de l'autre, chaque levier comprenant un bras qui possède deux parties terminales, la première partie terminale de chaque bras est reliée et connectée de façon articulée avec le corps du dispositif de fixation (1), la tige de support du garde-boue est adaptée pour être serrée dans un siège adapté (7) au moins une partie de la tige est réalisée d'une partie du bras du premier levier (5); l'autre partie (8) du bras du premier levier (5) est disposée à proximité de la charnière (9) du bras du deuxième levier (6) et est adaptée pour être pressée par le bras du deuxième levier contre la tige de support du garde-boue pour la serrer dans le siège approprié (7) après que la deuxième partie terminale (18) du bras du deuxième levier (6) utilise un dispositif de retenue (10), qui est solidement fixé au corps du dispositif de fixation (1) après avoir dépassé une interférence initiale du dispositif de retenue (10) .

2. Dispositif de fixation d' un garde-boue de bicyclette à la tige de support de garde-boue selon la revendication 1, caractérisé du fait que le corps du dispositif de fixation (1) présente une discontinuité (11) partielle de séparation entre la première partie (2) et la deuxième partie (3) du dispositif de fixation (1).

3. Dispositif de fixation d' un garde-boue de bicyclette sur la tige de support de garde-boue selon la revendication 2, caractérisé du fait que le siège (7) de la tige de support se prolonge pour l'insertion de cette tige de support au-delà de ladite discontinuité (11), partielle de séparation, jusqu'à presque toute l'extension totale du dispositif de fixation (1).

4. Dispositif pour la fixation d'un garde-boue de bicyclette sur la tige de support du garde-boue selon la revendication 1, caractérisé du fait que la réalisation de l'accouplement et son maintien ne nécessitent l'usage d'aucun outils ou instruments spéciaux.

5. Dispositif de fixation d' un garde-boue de bicyclette sur la tige de support de garde-boue selon la revendication 1, caractérisé du fait que la présence d' une rainure (12) entre le dispositif de maintien (10) pour retenir le second levier (6) et l'extrémité (18) du second levier configuré pour se joindre audit dispositif de maintien (10) est adaptée pour permettre le désaccouplement de la tige de support de garde-boue, de l'accouplement mutuel avec le dispositif de fixation (1) sans utiliser d'outils spéciaux, mais par la simple contrainte dans ladite rainure (12) en sens contraire à l'accouplement des bras de levier.
